Europäisches Patentamt

European Patent Office

Office européen des brevets

(19)

(11) Publication number: **0 226 300**
**A1**

(12) # EUROPEAN PATENT APPLICATION

(21) Application number: **86308199.8**

(22) Date of filing: **22.10.86**

(51) Int. Cl.⁴: **H02K 11/00**

(30) Priority: **25.10.85 JP 163704/85**

(43) Date of publication of application:
**24.06.87 Bulletin 87/26**

(84) Designated Contracting States:
**DE IT SE**

(71) Applicant: **MITSUBISHI DENKI KABUSHIKI KAISHA**
**2-3, Marunouchi 2-chome Chiyoda-ku Tokyo 100(JP)**

(72) Inventor: **Horie, Takeo c/o Mitsubishi Denki K.K.**
**Shizuoka Seisakusho 18-1 Ojika 3-chome Shizuoka-shi Shizuoka 422(JP)**
Inventor: **Nakane, Kazuhiro c/o Mitsubishi Denki K.K.**
**Shizuoka Seisakusho 18-1 Ojika 3-chome Shizuoka-shi Shizuoka 422(JP)**
Inventor: **Shida, Shigeru c/o Mitsubishi Denki K.K.**
**Shizuoka Seisakusho 18-1 Ojika 3-chome Shizuoka-shi Shizuoka 422(JP)**
Inventor: **Yamada, Masashi Ryoden Eng. K.K. Nagoya Jigyosho**
**Shizuoka Shisho 18-1 Ojika 3-chome Shizuoka-shi Shizuoka 422(JP)**

(74) Representative: **Carpenter, David et al**
**MARKS & CLERK Alpha Tower Suffolk Street Queensway**
**Birmingham B1 1TT(GB)**

(54) **Protective device for enclosed type motor compressor.**

(57) In an enclosed type motor compressor wherein a compressor unit (2) and a motor unit (3) are received in an enclosed vessel (1), a motor cover (5) is set in a space (4) between the motor unit (3) and the enclosing vessel (1), and an inner protector (6) for protecting the motor unit (3) is mounted on the motor cover (5) through an adaptor (7); a protective device for an enclosed type motor compressor comprising the fact that the adaptor (7) is provided with first protrusions (7d) which can be inserted into a notched hole (11) of the motor cover (5), and second protrusions (7e) which conceal the notched hole - (11) when the adaptor (7) is inserted into the notched hole (11) and then turned by a predetermined angle.

FIG. 1

FIG. 2

## PROTECTIVE DEVICE FOR ENCLOSED TYPE MOTOR COMPRESSOR

### BACKGROUND OF THE INVENTION

This invention relates to an enclosed type motor compressor, and more particularly to a protective device for an enclosed type motor compressor which is improved in the mounting structure of an inner protector for protecting a motor.

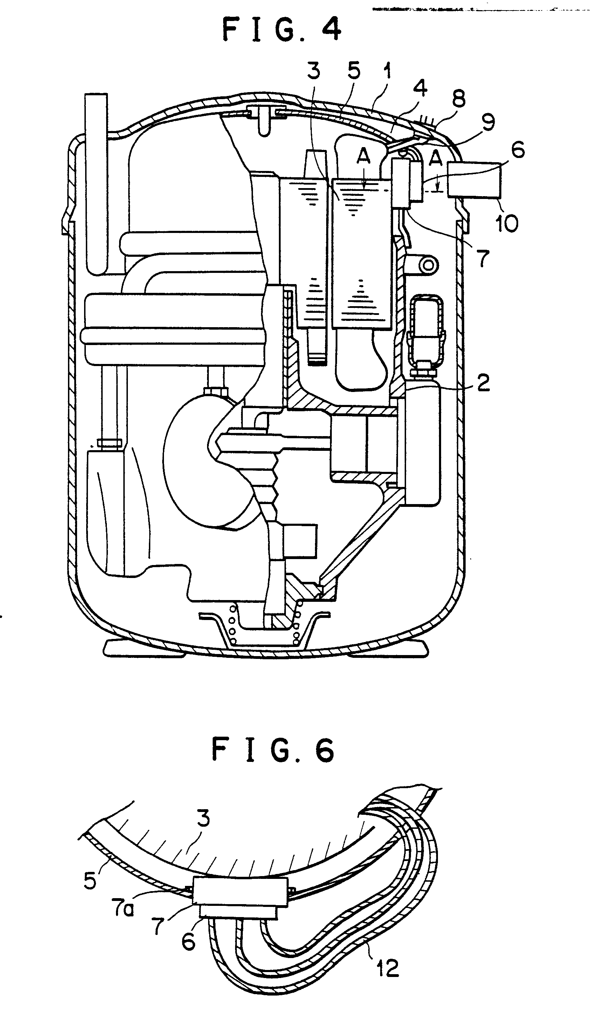

Figs. 4 to 6 are views showing the protective device of an enclosed type motor compressor in a prior art which is illustrated in the official gazette of Japanese Utility Model Registration Application Laid-Open No. 59-75763 by way of example. Fig. 4 is the view showing the whole construction, in which numeral 1 designates an enclosing vessel, numerals 2 and 3 designate a compressor unit and a motor unit received in the enclosing vessel 1 respectively, numeral 4 designates a space defined between the motor unit 3 and the enclosing vessel 1, and numeral 5 designates a motor cover set in the space 4 and fixed to the compressor unit 2. An inner protector 6 is attached to the motor cover 5 through an adaptor 7, and is disposed for protecting the motor unit 3. Numeral 8 indicates a sealed terminal which is connected with the motor unit 3 by lead wires 9, and numeral 10 a suction pipe.

Fig. 5 is the view showing the mounting structure of the inner protector 6. The adaptor 7 is provided with two protrusions 7a, and the motor cover 5 is formed with a notched hole 11 in conformity with the shape of the adaptor 7 having the protrusions 7a. That is, the notched hole 11 is provided with notches 11a in correspondence with the protrusions 7a.

The adaptor 7 in which the inner protector 6 is fitted is inserted into the notched hole 11, and the bottom surface of the adaptor 7 is brought into contact with, or brought near to, the side surface of the stator core of the motor unit 3. Thereafter, this adaptor 7 is turned. Thus, the protrusions 7a with which the adaptor 7 is provided come into engagement with the motor cover 5, and the adaptor 7 is fixed. In addition, the power source circuit of the inner protector 6 is connected to the motor unit 3 by passing the lead wires 9 from the sealed terminal 8, while lead wires 12 derived from the neutral points of the stator connection of the motor unit are connected to the inner protector 6. Fig. 6 is a sectional view taken along line A-A in Fig. 4, and it shows the state in which the inner protector 6 is mounted on the motor cover 5.

The motor cover 5 functions to prevent a gas such as coolant, drawn in the enclosing vessel 1 through the suction pipe 10, from directly touching the motor unit 3, and it simultaneously achieves a sound-insulating effect as a suction muffler. Besides, the inner protector 6 disposed for protecting the motor unit 3 senses the load current of the apparatus and the temperature of the stator of the motor unit during a compressor operation, so as to protect the stator from an overcurrent condition and to prevent the stator from burning due to an abnormal temperature rise.

The prior-art protective device for the enclosed type motor compressor is constructed as described above, and has the structure in which the inner protector 6 is mounted merely by inserting the adaptor 7 into the notched hole 11 of the motor cover 5 and thereafter turning it. Therefore, the contact of the adaptor 7 with the motor unit (the side surface of the stator core) is liable to become insufficient, and the suction gas flows in through the notches 11a of the notched hole 11 of the motor cover 5 conforming to the protrusions 7a of the adaptor 7. These lead to the problem that the temperature of the motor unit 3 cannot be precisely sensed, so the protection of the motor unit 3 is sometimes impossible.

### SUMMARY OF THE INVENTION

This invention has been made in order to eliminate such a problem, and has for its object to provide a protective device for an enclosed type motor compressor in which the contact of an adaptor with the side surface of a stator core is rendered reliable and the inflow of a suction gas is prevented, the precise temperature of a motor unit can be stably sensed.

In an enclosed type motor compressor wherein a compressor unit and a motor unit are received in an enclosing vessel, a motor cover is set in a space between the motor unit and the enclosing vessel, and an inner protector for pretecting the motor unit is mounted on the motor cover through an adaptor; said adaptor is provided with first protrusions which can be inserted into a notched hole of said motor cover, and second protrusions which conceal said notched hole when said adaptor is inserted into said notched hole and then turned by a predetermined angle.

The adaptor is turned by a predetermined angle after the first protrusions have been inserted into the notched hole of the motor cover, and it is fixed to the motor cover under this state. On this occasion, the notched hole of the motor cover is completely concealed by the second protrusions, and a suction gas does not flow from the notched hole to the side of the motor unit. Moreover, the contact of the adaptor with the motor unit becomes sufficient. Thus, the precise temperature of the motor unit is stably sensed.

## BRIEF DESCRIPTION OF THE DRAWINGS

Fig. 1 is a constructional view showing an embodiment of this invention;

Fig. 2 is a perspective view showing the mounting structure of an adaptor in Fig. 1;

Fig. 3 is a plan view of the adaptor;

Fig. 4 is a sectional view, partly cut away, showing a prior-art example;

Fig. 5 is a perspective view showing the mounting structure of an inner protector in Fig. 4; and

Fig. 6 is a sectional view taken along line A-A in Fig. 4.

## PREFERRED EMBODIMENT OF THE INVENTION

Now, an emboidment of the invention will be described with reference to the drawings.

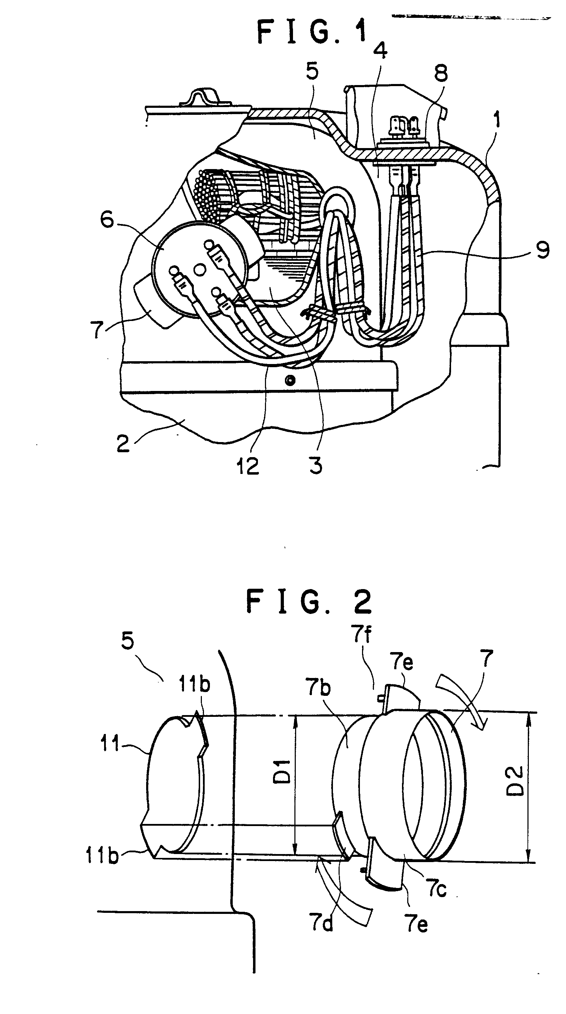

Fig. 1 is a constructional view which shows a protective device for an enclosed type motor compressor according to this invention, and in which portions corresponding to those of the prior-art example stated before are assigned the same symbols. Referring to the figure, numeral 1 designates an enclosing vessel in which a compressor unit 2 and a motor unit 3 are received. Numeral 4 designates the space between the motor unit 3 and the enclosing vessel 1, and a motor cover 5 is set here. Numeral 6 indicates an inner protector which is mounted on the motor cover 5 through an adaptor 7, numeral 8 indicates a sealed terminal; and numerals 9 and 12 indicate lead wires.

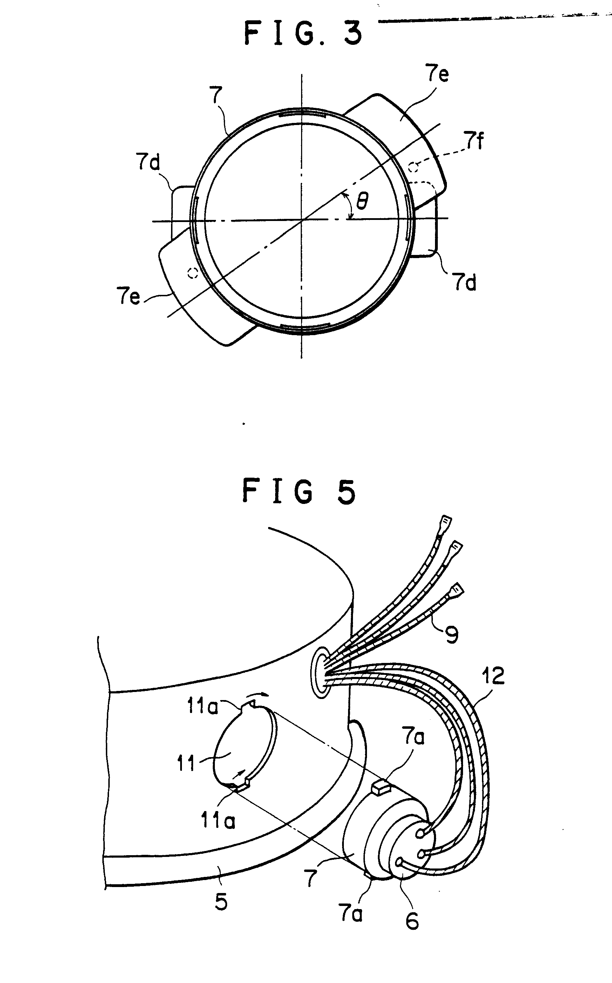

Fig. 2 is a perspective view showing the mounting structure of the adaptor 7 for receiving the inner protector 6, while Fig. 3 is a plan view of the adaptor 7. This adaptor 7 is such that a smaller-diameter portion 7b of a diameter (D1) agreeing with the diameter of the notched hole 11 of the motor cover 5 and a larger-diameter portion 7c of a diameter (D2) larger than the diameter of the notched hole are formed defining a step (D1 < D2) there-between. The smaller-diameter portion 7b and the larger-diameter portion 7c are provided with two pairs of protrusions; first protrusions 7d and second protrusions 7e respectively. Besides, the notched hole 11 of the motor cover 5 is provided with notches 11b in correspondence with the first protrusions 7d of the adaptor 7, and the first protrusions 7d can be inserted into the notched hole 11 of the motor cover 5. Thus, when the adaptor 7 is inserted into the notched hole 11 and then turned by a predetermined angle (θ), the second protrusions 7e conceal the notches 11b of the notched hole 11. Herein, stopper saliences 7f which abut on the motor cover 5 having a curved surface are formed on the sides of the second protrusions 7e closer to the first protrusions 7d. When the adaptor 7 is inserted and thereafter turned and is brought into engagement at a position restrained by the stopper saliences 7f, the notched hole 11 of the motor cover 5 is concealed by the larger-diameter portion 7c and the second protrusions 7e. In addition, the motor cover 5 is elastically held between the first protrusions 7d and the second protrusions 7e. After the adaptor 7 has been mounted on the motor cover 5 in this manner, the motor cover 5 is fixed to the compressor unit 2 as shown in Fig. 1.

In the protective device of the enclosed type motor compressor constructed as described above, the adaptor 7 is inserted into the notched hole 11 of the motor cover 5 and thereafter turned by the predetermined angle, and this motor cover 5 to which the adaptor 7 is attached is fixed to the compressor unit 2. Thus, the inner protector 6 received in the adaptor 7 is installed. Since, at this time, the notched hole 11 of the motor cover 5 is completely concealed by the larger-diameter portion 7c and the second protrusions 7e of the adaptor 7, the inflow of the suction gas through the notched hole 11 is prevented. More specifically, with the prior-art measure, when the adaptor 7 is inserted and is brought into engagement, the notches 11b corresponding to the first protrusions 7d of the adaptor 7 and a part corresponding to the outer periphery of the smaller-diameter portion 7b remain as a gap in the notched hole 11 of the motor cover 5, and the suction gas flows in through the gap, to hamper the sensing of the precise temperature of the inner protector 6. In contrast, according to this invention, the second protrusions 7e larger than the first protrusions 7d are set so as to reach the notches 11b of the notched hole 11 after the turning of the adaptor 7, and the larger-diameter portion 7c is constructed so as to simultaneously seal the peripheral part of the notched hole 11, so that the inflow of the suction gas is perfectly prevented. On that occasion, the stopper saliences 7f provided on the second protrusions 7e control the amount of turning after the insertion. Therefore, the shape of the bottom surface of the adaptor 7 is conformed to the shape of the object to be contacted, and an efficient set position can be readily attained at assemblage.

Moreover, the thickness of the first protrusions 7d of the adaptor 7 and the widths of the first protrusions 7d and the second protrusions 7e are conformed to the shape of the motor cover 5, both the protrusions 7d and 7e are endowed with an elasticity so that they can hold the motor cover therebetween, and the amount of insertion of the adaptor 7 is adjusted so as to be larger than a clearance which is defined between the motor cover 5 and the compressor unit 2, whereby the motor cover 5 and the adaptor 7 can be assembled beforehand, and in fixing the motor cover 5 to the compressor unit 2, the adaptor 7 can be brought into firm contact with the motor unit 3. By considering the combination of the motor cover 5 with the stopper saliences 7f provided on the second protrusions 7e, the adaptor 7 can be reliably brought into contact with the motor unit 3 in the above assemblage system whatever shape the contact surface of the motor unit 3 may have, and temperatures can be stably sensed by the inner protector 6.

In the foregoing embodiment, the case where the surface of the motor cover 5 on which the adaptor 7 is mounted is the curved surface has been assumbed, and the example in which the stopper saliences 7f are provided on the second protrusions 7e has been explained. However, in a case where the mounting surface of the adaptor 7 is a flat surface or is a curved surface close to the flat surface, the stopper saliences 7f may well be provided on the sides of the first protrusions 7d closer to the second protrusions 7e.

As set forth above, according to this invention, an adaptor for receiving an inner protector is provided with first protrusions which can be inserted into the notched hole of a motor cover, and second protrusions which conceal the notched hole when the adaptor is inserted into the notched hole and then turned by a predetermined angle. Therefore, the contact of the adaptor with a motor unit becomes sufficient, and the inflow of a suction gas into the side of the motor unit can be prevented, to attain the effects that the precise temperature sensing of the motor unit can be stably performed and that the sound-insulating effect of the motor cover is not spoilt.

## Claims

1. In an enclosed type motor compressor wherein a compressor unit and a motor unit are received in an enclosing vessel, a motor cover is set in a space between the motor unit and the enclosing vessel, and an inner protector for protecting the motor unit is mounted on the motor cover through an adaptor; a protective device for an enclosed type motor compressor characterized in that said adaptor is provided with first protrusions which can be inserted into a notched hole of said motor cover, and second protrusions which conceal said notched hole when said adaptor is inserted into said notched hole and then turned by a predetermined angle.

2. A protective device for an enclosed type motor compressor as defined in Claim 1, wherein said second protrusions with which said adaptor is provided are formed with stopper saliences which abut on said motor cover.

3. A protective device for an enclosed type motor compressor as defined in Claim 1 or Claim 2, wherein said first protrusions and said second protrusions of said adaptor are provided so as to elastically hold said motor cover between the respective protrusions.

4. A protective device for an enclosed type motor compressor as defined in any of Claims 1 to 3, wherein said adaptor is formed with a smaller-diameter portion whose diameter agrees with a diameter of said notched hole of said motor cover, and a larger-diameter portion whose diameter is larger than it.

# F I G. 1

# F I G. 2

# F I G. 3

# F I G 5

# F I G. 4

# F I G. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 236 092  (DIFLORA)<br>* Column 2, line 29 - column 3, line 61; figures 1,3,6 * | 1 | H 02 K   11/00 |
| Y | GB-A-2 119 046  (HOOVER)<br>* Page 1, line 102 - page 2, line 38; figures 1,2 * | 1 | |
| A | | 2-4 | |
| A | FR-A-1 181 607  (SIEMENS)<br>* Abstract; figure * | 1 | |
| A | FR-A-2 276 494  (CITROEN)<br>* Page 3, line 28 - page 5, line 35; figures 1-3 * | 1 | TECHNICAL FIELDS SEARCHED (Int. Cl.4) |
| A | US-A-3 395 297  (EMERSON)<br>* Column 2, line 13 - column 3, line 12; figures 1-5 * | 1 | H 02 K   11/00<br>F 16 L   37/00 |

The present search report has been drawn up for all claims

| Place of search | Date of completion of the search | Examiner |
|---|---|---|
| THE HAGUE | 09-02-1987 | LE GUAY P.A. |